# EUROPEAN PATENT APPLICATION

(11) **EP 3 588 968 A1**
(43) Date of publication of application: **01.01.2020**
(21) Application number: 18305811.4
(22) Date of filing: 26.06.2018
(51) Int. Cl.: H04N 21/472, H04N 21/44, H04N 21/488

(54) **METHOD AND DEVICE FOR LAUNCHING AN ACTION RELATED TO AN UPCOMING AUDIO VISUAL PROGRAM**

(71) Applicant: InterDigital CE Patent Holdings, 75017 Paris (FR)
(72) Inventor: LEYENDECKER, Philippe, 35576 Cesson-Sévigné (FR); QUERRE, Goulven, 35576 Cesson-Sévigné (FR)
(74) Representative: Huchet, Anne

(57) **Abstract**

A method and device for launching an action related to an upcoming audio visual program comprising detecting, in an image of a first audio visual program, data related to at least one upcoming audio visual program, said data comprising at least a title, a time and a date for said at least one upcoming audio visual program. An embodiment discloses how to handle the case where multiple audio visual programs are announced in the first audio visual program.

## Description

### 1. Technical Field

At least one of the present embodiments generally relates to the field of the managing of upcoming audio visual programs. More specifically, at least one embodiment relates to a method and a device for launching an action related to an audio visual program.

### 2. Background Art

TV channels often advertise upcoming programs. The advertisement is for example "This evening at 21H, the next episode of Game of thrones" or "Tomorrow at 21H, the next episode of Game of thrones on ABC". When the user sees such information on his TV screen and he is interested in that content, he needs presently to program manually (eventually by using an Electronic Program Guide) his audio-video recorder or his set top box to record this program. It takes time and is potentially error-prone, notably when plurality of upcoming programs are presented together on the screen.

### 3. Summary

A purpose of the present disclosure is to provide a method and/or apparatus that allows a user to launch simply and rapidly an action related to an audio visual program when information related to this audio visual program appears on a screen.

The present disclosure proposes a method for launching an action related to an upcoming audio visual program comprising:
- receiving and displaying audio visual content,
- detecting a command for requesting an action;
- selecting at least one image from the audio visual content received when said command is detected;
- detecting, in said at least one image, data related to at least one upcoming audio visual program, said data comprising at least a title, a starting time and a date for said at least one upcoming audio visual program;
- launching an action related to said at least one upcoming audio visual program based on said data.

The action is thus launched automatically when data related to an upcoming audio visual program is detected.

According to an embodiment, the command is detected when pressing a dedicated key on a remote control. The action is thus launched by simply pressing on a key of a remote control or of a front panel.

According to an embodiment, the action related to the upcoming audio visual program belongs to the group of the following actions:
- scheduling a recording of the upcoming audio visual program;
- scheduling a sending of a reminder notification related to the upcoming audio visual program before said upcoming audio visual program is scheduled;
- sending a notification related to said upcoming audio visual program when said upcoming audio visual program is scheduled; and
- scheduling a download of the upcoming audio visual program.

According to an embodiment, the detected data is related to a plurality of audio visual programs and comprise, for each of plurality of audio visual programs, a title, a starting time, a date and a channel identifier of the channel on which said audio visual program is broadcast. This embodiment is applicable when the TV channel displaying the video content belongs to a bouquet of TV channels. In that case, it is not unusual, for a TV channel of this bouquet, to promote audio visual programs of the other TV channels of the bouquet. In this embodiment, the detected data advantageously comprise the channel on which said audio visual program is broadcast in order to enable the recording of the concerned audio visual program or to include the channel number in the reminder notification.

According to an embodiment, the detected data is text data and the step of detecting data in the selected image comprises:
- applying an optical character recognition and/or a logo recognition on the selected image in order to generate a text, and
- detecting, in said text, data related to at least one upcoming audio visual program, said data comprising at least a title, a starting time and a date.

According to an embodiment, the method further comprises:
- applying a speech recognition to a portion of an audio content associated with said video content, said portion of audio content being coincident with the detected command,
- detecting, in the recognized speech of said portion of audio content, supplementary data related to at least one upcoming audio visual program, said supplementary data comprising a title and/or a starting time and/or a date, and
- verifying that said supplementary are coincident with said data.

The supplementary data issued from this speech recognition can thus be used to verify the conformance of the data issued from the optical character recognition.

According to an embodiment, the method comprises only speech recognition for generating the data related to the audio visual program. In this embodiment, the detected data is generated by:
- applying a speech recognition to a portion of an audio content associated with said video content in order to generate text, said portion of audio content being coincident with the detected command,
- detecting, in said text, data related to at least one upcoming audio visual program, said data comprising at least a title, a starting time and a date.

In some cases, the command (key pressed by the user) may be triggered some seconds after the promotion of an audio visual program is displayed such that the detection of data related to this TV fails. Thus, according to an embodiment, the method further comprises:
- if data related to at least one upcoming audio visual program are not detected in the selected image, accessing at least one previous image in said video content, and
- applying the data detection to said at least one previous image.

According to an embodiment, the previous image is accessed from a time-shift buffer or a local memory like a FIFO designed for storing the last previous images received.

According to an embodiment, the method further comprises, after detection of data related to at least one upcoming audio visual program:
- displaying the detected data,
- asking validation for launching an action related to said at least one audio visual program associated with said data, and
- launching said action if validated.

According to an embodiment, the method further comprises:
- after detection of data related to at least one upcoming audio visual program, verifying said data is consistent with data included in an electronic program guide; and
- launching the action if said data is consistent with data included in the electronic program guide.

According to an embodiment, the method further comprises,
when detecting data related to multiple audio visual programs, detected data comprising a plurality of channel identifiers and a plurality of starting times,
associating one of the plurality of starting times to one of the channels in accordance with distance measurement between the position of the data on a screen.

According to an embodiment, the method further comprises determining an orientation of the data, wherein the orientation is horizontal when the difference between horizontal coordinates of the detected channel related data is smaller than the difference between the vertical coordinates of the detected channel related data.

According to an embodiment, when the detected data is related to a plurality of audio visual programs, displaying the detected data of the plurality of audio visual programs and obtaining selection of one of the plurality of programs to launch an action related to the selected audio visual program.

The present disclosure also relates to a device for launching an action related to an upcoming audio visual program, said device being configured to:
- receive and display audio-video content,
- detect a command for requesting an action;
- select at least one image received when said command is detected;
- detect, in said at least one selected image, data related to at least one upcoming audio visual program, said data comprising at least a title, a starting time and a date for said at least one upcoming audio visual program; and
- launch an action related to said at least one upcoming audio visual program based on said data.

According to an embodiment, the action related to the upcoming audio visual program belongs to the group of the following actions:
- scheduling a recording of said upcoming audio visual program;
- scheduling a sending of a reminder notification related to said upcoming audio visual program before said upcoming audio visual program is scheduled;
- sending a notification related to said upcoming audio visual program when said upcoming audio visual program is scheduled; and
- scheduling a download of the upcoming audio visual program.

The present disclosure also relates to a computer program product comprising program code instructions for implementing the above-disclosed method, when said program is executed on a computer or a processor.

The present disclosure also relates to a non-transitory computer-readable storage medium storing a computer program product as defined hereinabove.

### 4. Brief description of the drawings

The invention can be better understood with reference to the following description and drawings, given by way of example and not limiting the scope of protection, and in which:
- Figure 1 is a flow chart showing an example of a method for launching an action related to an upcoming audio visual program according to an embodiment of the present disclosure;
- Figures 2 to 6 are examples of audio visual programs to be detected in a picture displayed on a screen; and
- Figure 7 is a schematic view of an apparatus for launching an action related to an audio visual program according to one embodiment.

### 5. Description of embodiments

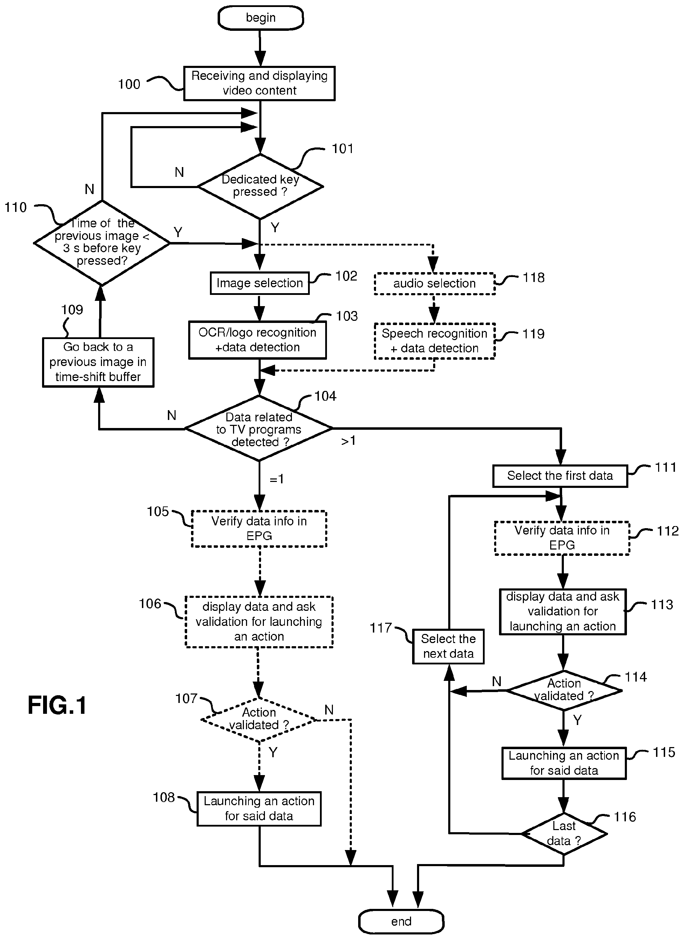

**Figure 1** is a flow chart showing an example of method for launching an action related to an upcoming TV program according to an embodiment of the present disclosure. These steps may be implemented in a unique device or in a plurality of devices. This device is (or these devices) is (are) equipped with means for receiving and processing audio-video content. TV programs are audio-visual programs transmitted for example through broadcast systems using terrestrial, cable or satellite distribution systems, by streaming using broadband distributions systems or through other distribution means. The action related to the upcoming TV program may consist in scheduling a recording of the upcoming TV program or scheduling the sending of a reminder notification related to this upcoming TV program, for example one day or one hour before the program is broadcast or an alert when said upcoming TV program broadcast starts and another channel is selected, or sending a notification related to said upcoming audio visual program when said upcoming audio visual program is scheduled or scheduling a download of the upcoming TV program.

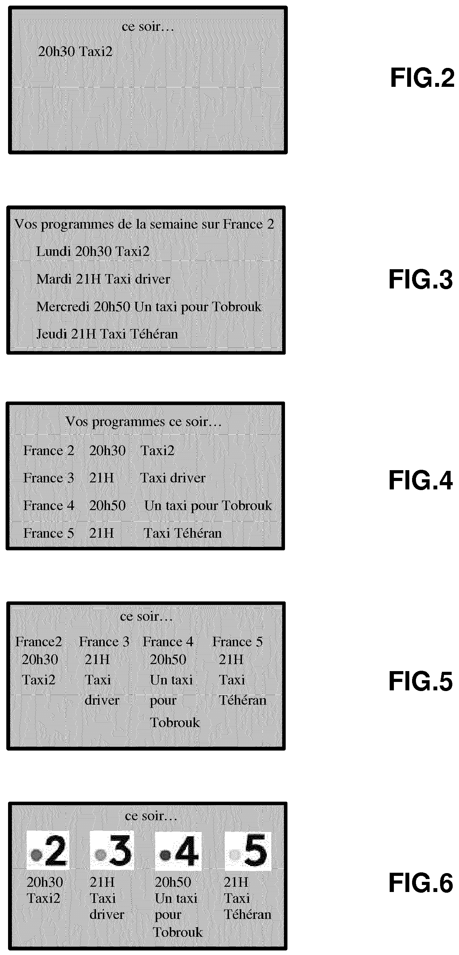

As shown in the example embodiment of Figure 1, the method comprises the followings steps. In a step 100, a first audio visual program is received and displayed. This first audio visual program includes video images and the associated audio and is provided as an advertisement or announcement to increase the audience of advertised program. The video images are displayed on a screen. When the displayed video images announce an upcoming program (for instance, ce soir 20:30 "Taxi 2" as illustrated by **Figure 2**) and when the viewer is interested in seeing or recording this program, the viewer enters a command (for example by pressing a dedicated key on a remote control or a front panel) to launch the schedule action. Thus, in a step 101, the method detects if such a command has been entered.

Then, if a command has been entered, the image of the video content displayed at the starting time the command is entered is selected or captured in a step 102. The selected image is stored in a memory in order to be processed.

Then, in a step 103, an optical character recognition (OCR) algorithm is applied to selected image in order to extract text data included in the selected image. Text data generated by the OCR are then processed to detect if they include a title, a starting time and a date for an upcoming TV program. The detection can be facilitated by matching recognized text data towards dictionaries for the different terms to be recognized (for example days of the week, today/tomorrow/tonight, channel names). In the image of **Figure 2****,** the title of an upcoming TV program ("Taxi 2"), its starting time (20h30) and its date (ce soir) and its channel number (by default, the current one) are detected. Of course, the date ("ce soir") should be converted in a date (for example June 10, 2018) and in a channel number that can be interpreted by the device that will launch the action. In most case, the channel number is identified in the image by a logo (instead of text). So, preferably, a logo recognition algorithm is also applied on the selected image in order to retrieve the channel number.

If the selected image does not include any channel number or logo, the channel number is considered to be the channel number of the channel currently displayed.

The number of data related to an upcoming TV program detected in the selected image is then tested in the step 104. If the selected image contains only data related to only one TV program, the action related to the TV program (for instance, scheduling of the recording of the TV program) is launched in a step 108 based on these data.

The action is thus launched automatically when data related to an upcoming TV program is detected.

Optionally, after detection of data related to an upcoming TV program in step 103, it is verified that the data is consistent with data included in an electronic program guide (EPG) in a step 105. It allows to verify the conformance of the detected data with the channel scheduling and that it corresponds to a true event. The action is then launched only if said data is consistent with data included in the electronic program guide. Furthermore, in the case where the action is a programmed recording, the duration or the end time of the audio visual program can be retrieved from the EPG to schedule the recording.

Optionally, after detection of data related to an upcoming TV program in step 103, the detected data is displayed on a screen in a step 106 and it is proposed to the user, via a user interface displayed in the screen, to validate the action to be launched. If the action is validated in a step 107, the action is launched. If not, the action is not launched.

If no data related to a TV program is detected in step 103, it may come from an error of the user and the detection of the command is to be ignored. It may also come from the fact that the user has pressed the key (command) too late, i.e. some seconds after the promotion of a TV program has been displayed. In that case, it is thus proposed, in a step 109, to access at least one previous image of the audio visual content and to apply the image selection and data detection (steps 102 and 103) to said at least one previous image. Such previous images are for instance accessible in a time-shift buffer of the apparatus receiving the video content. The previous image is selected in the images received n seconds before the key is pressed (step 110). n is for example equal to 3 such that the previous image is selected in the images of the time-shift buffer received 3 seconds before the key is pressed (step 110). The steps 102, 103 and 104 can thus possibly be carried out on a plurality of previous images of the time-shift buffer, iterating multiple times before detecting data, until data related to Audio visual programs are detected. If no data is detected in the previous images received n seconds before the key is pressed, the command is ignored and the process goes back to step 101.

It is not unusual, for a service operator managing a television network comprising multiple TV channels, to advertise simultaneously multiple audio visual programs that are provided on different channels. In this case, the detection step 103 will detect multiple data related to this plurality of TV programs. This case is illustrated by the examples of figures 3-6.

In **Figure 3****,** the image promoting TV programs includes a list of four TV programs all broadcasted by the French channel France 2. The list is arranged vertically (the TV programs are displayed one below the other).

In **Figure 4****,** the image promoting TV programs includes a list of four TV programs broadcasted by four French channels (France 2, France 3, France 4, France 5) belonging to a same bouquet of channels. The four TV programs are programmed the same day ("ce soir"). The list is also arranged vertically.

In **Figure 5****,** the image includes the same data than the image of Figure 4 but the list of TV programs is arranged horizontally (the TV programs are displayed one next to the other).

In **Figure 6****,** the names of the four French channels (France 2, France 3, France 4, France 5) are replaced with their logos. The processing step 103 should thus be able to convert the logos into channel identifiers.

In step 104, multiple data is detected when multiple channels or multiple starting time or multiple dates are detected. In order to correctly group the multiple text data together, the distance between the elements (for example the detected channels) is analyzed to detect the orientation arrangement of the data. More particularly vertical and horizontal distances are compared and the smallest distance determines the orientation. For example, in figure 4 the difference between the horizontal positions of the channel names or titles (France2, France3, France4, France 5) is close to zero while the difference between the vertical positions of the channel names is around 1/6^{th} of the screen height. Thus, the device determines that the elements are arranged horizontally. In the example of figure 5, it is the opposite result: the difference between the vertical positions of the channel names is smaller (again, close to zero) than the difference between the horizontal positions. Once the direction is determined, the device associates together the detected text data according to the smallest distance. For example, in the case of figure 4, the device selects the starting time with closest distance to the channel name. This results in selecting "20h30" as starting time for "France2", "21h00" for "France3", and so on. The person skilled in the art will appreciate that the difference comparison can be done either on the cumulated differences, on median value of the differences or on the average value of the differences.

In one embodiment, the distance difference is computed with different weighting according the detect orientation in order to favor text data appearing in either the same "line" or the same "column". In this embodiment, the title of the first program of figure 4 is correctly detected as being "Taxi2". With a simpler distance comparison, the selected title would erroneously be "Vos programmes ce soir".

In another embodiment, the relative positions of data of same type (logo or channel number, time, date) in the image are estimated in order to define an orientation (horizontal or vertical) and then to associate together a channel number, a time and a date for each upcoming TV program displayed on the screen.

In case of multiple data detected in step 104, the method consists first in selecting the first data (step 111), displaying the detected data (step 113), prompting the user, via a user, to validate that an action is to be launched for this data and launching the action (step 115) if the action is validated by the user (step 114). If the current data is the last data of the detected data (step 116) or if the action to be launched is not validated (step 114), the next data of the detected data is selected (step 117) and the steps 113-116 are reiterated. In a variant, all the detected data is displayed and the user selects, via a user interface, the data for which an action is to be launched.

In this case, the detected data comprise the channel identifier on which said TV program is broadcast in order to enable the recording of the concerned TV program or to include the channel identifier number in the reminder notification.

As for the case of data for a unique TV program detected, the method advantageously comprises a step 112 for verifying that the detected data is consistent with data included in an electronic program (EPG).

This method allows to schedule actions without the need of metadata (except EPG for some embodiments) in addition to the video content received and without complicated actions for the user (one key stroke for launching a command and, in some embodiments, one key stroke for validating the action to be launched).

According to an embodiment, the method further comprises, in parallel with the steps 102 and 103, a step 118 in which a portion of an audio content associated with the video content is selected, said portion of audio content being coincident with the time at which a command is detected (step 101) and a step 119 in which a speech recognition algorithm is applied to this portion of audio content. The duration of this audio portion may be for instance 10 seconds before or around the time at which a command is detected. The speech is thus converted into text data. The resulting text data is then analyzed to detect data related to an upcoming TV program. This embodiment is useful when a voice-over announces the events displayed on the screen. Supplementary data, including a title and/or a starting time and/or a date and/or a channel, can thus be extracted. In the step 119, it is then verified that these supplementary are coincident with the data issued from the OCR. These additional steps 118 and 119 allows to verify the conformance with the data issued from the optical character recognition.

In another embodiment, the steps 118 and 119 may replace the steps 102 and 104. In this embodiment, the detection of data related to an upcoming TV program is only based on speech recognition.

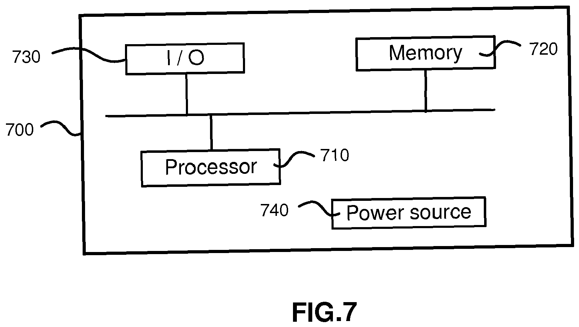

**Figure 7** represents an example architecture of a device 700 configured to launch an action related to a TV program according to any example embodiment of the present disclosure.

The device 700 comprises one or more processor(s) 810, which is(are), for example, a CPU, a GPU and/or a DSP (English acronym of Digital Signal Processor), along with internal memory 720 (for example RAM, ROM, EPROM). The device 700 comprises one or several Input/ Output interface(s) 730 adapted to enter or receive commands and/or video contents and to deliver commands or notifications. It also comprises a power source 740 which may be external to the device 700. The Input/ Output interface(s) 730 may communicate with a remote control adapted to receive commands. This remote control may comprise a key for launching an action (recording and emission of a notification) related to a TV program and a key (different or not from the previous one) for validating the action. The device 700 may also comprise network interface(s) (not shown). The video content to be analysed by OCR or speech recognition is stored in the memory 720 or in a memory external to the device.

The device 700 further comprises a computer program stored in the memory 720. The computer program comprises instructions which, when executed by the device 700, in particular by the processor 710, make the device 700 carry out the method described with reference to Figure 1. According to a variant, the computer program is stored externally to the device 700 on a non-transitory digital data support, for example on an external storage medium such as a HDD, CD-ROM, DVD, a read-only and/or DVD drive and/or a DVD Read/Write drive, all known in the art. The device 700 thus comprises an interface to read the computer program. Further, the device 700 could access one or more Universal Serial Bus (USB)-type storage devices (for example, "memory sticks.") through corresponding USB ports (not shown).

According to example and non-limitative embodiments, the device 700 is a device, which belongs to a set comprising:
- a TV (or television);
- a set-top box ;
- an audio-video recorder;
- a mobile device;
- a communication device;
- a tablet (or tablet computer);
- a personal computer; and
- a laptop.

The implementations described herein may be implemented in, for example, a method or a process, a device, a software program, a data stream, or a signal. Even if only discussed in the context of a single form of implementation (for example, discussed only as a method or a device), the implementation of features discussed may also be implemented in other forms (for example a program). A device may be implemented in, for example, appropriate hardware, software, and firmware.

Implementations of the various processes and features described herein may be embodied in a variety of different equipment or applications, particularly, for example, equipment or applications.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations.

## Claims

1. Method for launching an action related to an upcoming audio visual program comprising:
- receiving and displaying (100) an audio visual content,
- detecting (101) a command for requesting an action;
- selecting (102) at least one image from the audio visual content received when said command is detected;
- detecting (103, 104, 118, 119), in said at least one image, data related to at least one upcoming audio visual program, said data comprising at least a title, a starting time and a date for said at least one upcoming audio visual program;
- launching (108) an action related to said at least one upcoming audio visual program based on said data.

2. Method according to Claim 1, wherein said command is detected when pressing a dedicated key on a remote control or a front panel.

3. Method according to Claim 1 or 2, wherein the action related to the upcoming audio visual program belongs to the group of the following actions:
- scheduling a recording of said upcoming audio visual program;
- scheduling a sending of a reminder notification related to said upcoming audio visual program before said upcoming audio visual program is scheduled;
- sending a notification related to said upcoming audio visual program when said upcoming audio visual program is scheduled; and
- scheduling a download of the upcoming audio visual program.

4. Method according to any one of Claims 1 to 3, wherein the detected data is related to a plurality of audio visual programs and comprise, for each of plurality of audio visual programs, a title, a starting time, a date and a channel identifier of the channel on which said audio visual program is broadcast.

5. Method according to any one of Claims 1 to 4, wherein the step of detecting data in said at least one image comprises:
- applying (103) an optical character recognition and/or a logo recognition on said at least one image in order to generate text, and
- detecting (103), in said text, data related to at least one upcoming audio visual program, said data comprising at least a title, a starting time, a date and possibly a channel identifier.

6. Method according to any one of Claims 1 to 5, wherein the method further comprises:
- applying (118, 119) a speech recognition to a portion of an audio content associated with said video content, said portion of audio content being coincident with the detected command,
- detecting (119), in the recognized speech of said portion of audio content, supplementary data related to at least one upcoming audio visual program, said supplementary data comprising a title and/or a starting time and/or a date and/or possibly a channel identifier and
- verifying that said supplementary are coincident with said data.

7. Method according to any one of Claims 1 to 4, wherein the detected data is generated by:
- applying (118, 119) a speech recognition to a portion of an audio content associated with said video content in order to generate text, said portion of audio content being coincident with the detected command,
- detecting (119), in said text, data related to at least one upcoming audio visual program, said data comprising at least a title, a starting time and a date.

8. Method according to any one of Claims 1 to 7, wherein the method further comprises:
- if data related to at least one upcoming audio visual program are not detected in the selected image, accessing (109) at least one previous image in said video content, and
- applying the data detection to said at least one previous image.

9. Method according to any one of Claims 1 to 8, wherein the method further comprises,
when detecting data related to multiple audio visual programs, detecting data comprising a plurality of channel identifiers and a plurality of starting times,
associating one of the plurality of starting times to one of the channels in accordance with distance measurement between the position of the data on a screen.

10. Method according to claim 9, wherein the method further comprises determining an orientation of the data, wherein the orientation is horizontal when the difference between horizontal coordinates of the detected channel related data is smaller than the difference between the vertical coordinates of the detected channel related data.

11. Method according to any of claims 4 to 10 further comprising, when the detected data is related to a plurality of audio visual programs, displaying the detected data of the plurality of audio visual programs and obtaining selection of one of the plurality of programs to launch an action related to selected audio visual program.

12. Device for launching an action related to an upcoming audio visual program, said device being configured to:
- receive and display video content,
- detect a command for requesting an action;
- select an image received when said command is detected;
- detect, in the selected image, data related to at least one upcoming audio visual program, said data comprising at least a title, a starting time and a date for said at least one upcoming audio visual program; and
- launch an action related to said at least one upcoming audio visual program based on said data.

13. Device according to Claim 12, wherein the action related to the upcoming audio visual program belongs to the group of the following actions:
- scheduling a recording of said upcoming audio visual program;
- scheduling a sending of a reminder notification related to said upcoming audio visual program before said upcoming audio visual program is scheduled;
- sending a notification related to said upcoming audio visual program when said upcoming audio visual program is scheduled; and
- scheduling a download of the upcoming audio visual program.

14. Computer program product comprising program code instructions for implementing the method according to any one of claims 1 to 11, when said program is executed on a computer or a processor

15. Non-transitory computer-readable storage medium storing a computer program product according to claim 14.
